# EUROPÄISCHE PATENTSCHRIFT

(11) **EP 1 471 001 B1**
(45) Veröffentlichungstag und Bekanntmachung des Hinweises auf die Patenterteilung: **09.08.2006**
(21) Anmeldenummer: 04002965.4
(22) Anmeldetag: 11.02.2004
(51) Int. Cl.: B64D 11/00, B60K 35/00

(54) **Einrichtungsmodul zur Informationsbereitstelllung an Bord von Transportmitteln**
On-board passenger information module for transportation vehicles
Module d'information pour passagers à bord d'un véhicule de transport

(30) Priorität: 24.02.2003 DE 10307958
(43) Veröffentlichungstag der Anmeldung: 27.10.2004
(73) Patentinhaber: Airbus Deutschland GmbH, 21129 Hamburg (DE)
(72) Erfinder: Döbertin, Oliver, 22589 Hamburg (DE); Schotte, Hermann, 21614 Buxtehude (DE); Fischer, Regine, 74532 Ilshofen (DE)

(56) Entgegenhaltungen:
- EP-A- 0 981 125
- DE-A- 3 444 802
- US-A- 4 913 487
- US-A- 5 024 398
- US-A- 6 067 078

## Beschreibung

Die Erfindung betrifft ein Einrichtungsmodul zur Informationsbereitstellung an Bord von Transportmitteln - insbesondere von Verkehrsflugzeugen - zum Gebrauch durch das Kabinenpersonal und Passagiere.

Das Einrichtungsmodul in der Form eines Informationsterminals hat die Funktion einer Zentrale zur Eingabe und zum Abruf von Informationen beim Betrieb des Transportmittels bzw. dient den Passagieren als Kommunikations- und Informationscenter. Damit ist das Terminal sowohl Schaltstelle für die Steuerung von Kabinen-Einstellwerten (z. B. Klima, Beleuchtung, Ansagen etc.) als auch Dienstleistungszentrum für die Passagiere (z. B. Auskunftsstelle für Anschlussflüge, Telefonzentrale, e-mails etc.).

Ähnliche Einrichtungen sind in Passagierflugzeugen nicht bekannt. Lediglich ein Audio-/Video-Control-Center im Flugzeug mit ausschließlich kabinenspezifischen Funktionen zum Betreiben durch das Kabinenpersonal sind bekannt, ein individueller Service für Passagiere kann damit jedoch nicht angeboten werden. Ein solches Center ist meist in einer Gepäckablage oder in einem Stauschrank untergebracht, wo es Platz für die Unterbringung von Gepäck oder Kleidung wegnimmt.

In Verkehrsmitteln wie beispielsweise die Bahn sind in Schlafwagen Informationspunkte mit Thekenelementen vorgesehen, hinter denen zeitweise ein Bahnbediensteter sitzt und per Telefon die einzelnen Schlafkabinen erreichen kann. Generell haben aber diese Einrichtungen aufgrund ihrer starren Bauweise einen größeren Platzbedarf und sind relativ schwer.

US 4,913,487 zeigt einen Flugbegleitersitz, der in einen "Arbeitshocker" verwandelt werden kann, um die Eingabe von Daten in ein Rechnersystem durch einen Flugbegleiter zu erleichtern. Diese Workstation ist stehend oder mit einer Sitzhilfe unterstützend für den Flugbegleiter nutzbar und kann darüber hinaus in einen Flugbegleitersitz verwandelt werden. Es sollen neben der Dateneingabe für den Flugbegleiter die Möglichkeiten zur Kabinensteuerung und Anzeige von den Kabinensystemen gegeben sein, es sind jedoch keine Mittel angegeben, die passagierbezogene Servicefunktionen ermöglichen und darüber hinaus die Möglichkeit bieten, den Zugang zu bestimmten Funktionen zu versperren.

Aus DE 34 44 802 ist eine Anordnung zur Durchführung von passagierbezogenen und/oder flugbegleiterbezogenen Funktionen in einem Flugzeug bekannt, wobei an Flugzeugsitzen Datenterminals vorgesehen sind, die passagierbezogene Informationen und Dienstleistungen anbieten und die durch den Passagier genutzt werden können. Ein separates Informationsterminal ist diesem Dokument nicht entnehmbar.

Somit ist es Aufgabe der Erfindung, ein universell für Personal und Passagiere nutzbares Informationsterminal mit Multifunktionen an Bord von Transportmitteln, vor allem in Verkehrsflugzeugen, zu schaffen, bei dem eine einfache Bedienung und ein geringer Platzbedarf gewährleistet werden soll.

Diese Aufgabe wird erfindungsgemäß durch die im Patentanspruch 1 genannten Maßnahmen gelöst.

Es wird erfindungsgemäß als Einrichtungsmodul ein aufklappbares schrankartiges Informationsterminal mit entsprechenden Multifunktionselementen vorgeschlagen. Der Einbauort des Moduls liegt vorzugsweise im Türzugangsbereich eines Passagierflugzeugs, um so eine Nutzung des bisher nicht durch Kabineneinbauten belegten Bereiches zu ermöglichen. Außerdem wird so kein für Einrichtungen, Sitze oder Gepäck benötigter Raum belegt. Die Anordnung des Einrichtungsmoduls im Türbereich und der Zustand mit eingeklapptem Türelement während des Ein- und Aussteigens kann zur Information der ankommenden Passagiere genutzt werden. Im Flug fungiert das Modul im ausgeklappten Zustand als Arbeitsplatz des Kabinenpersonals zur Betreuung mehrerer Funktionen als:
- Informationscenter
- Cabin System Control Center
- Video/Audio Control Center

Neben diesen für den Flugbetrieb erforderlichen Funktionen enthält das Modul Service-Elemente zwecks Dienstleistung an den Passagieren. Beispielsweise ist hier eine Auskunft für Anschlussflüge, eine Telefonzentrale, ein Abrufen von Informationen aus dem Internet oder das verschicken von e-mails möglich. Eine Nutzung durch einen Passagier selbst ist somit möglich.

Da eine derartige Einrichtung bisher in Flugzeugen nicht vorhanden ist, kann erwartet werden, dass das erfindungsgemäße Dienstleistungs-Center zur Komforterhöhung für Passagiere beitragen wird und damit für die Fluglinien einen Wettbewerbsvorteil bedeutet.

Weiterbildungen und vorteilhafte Ausgestaltungen der Erfindung sind in den Ansprüchen 2 bis 8 angegeben. Weitere Einzelheiten und Vorteile ergeben sich aus der nachfolgenden Beschreibung eines Ausführungsbeispiels der Erfindung.

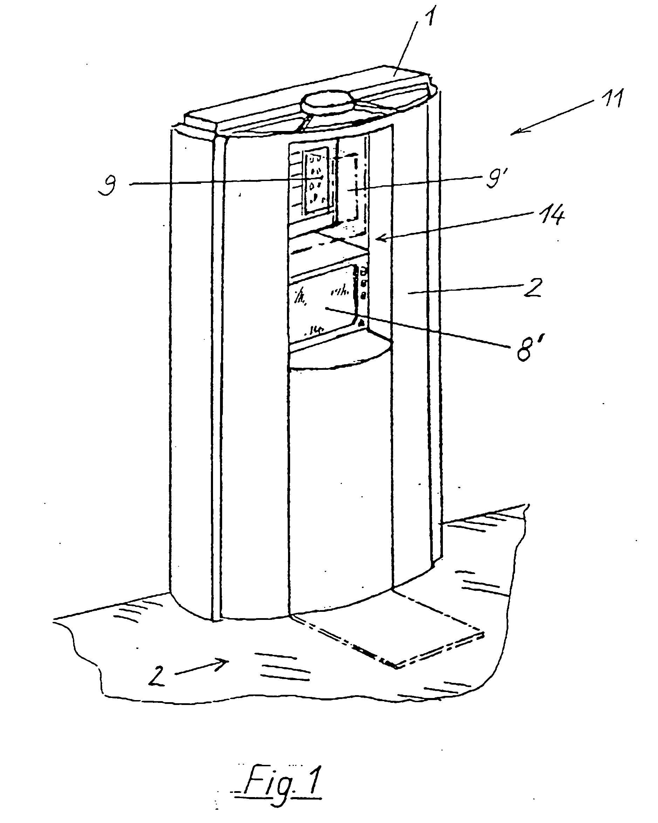

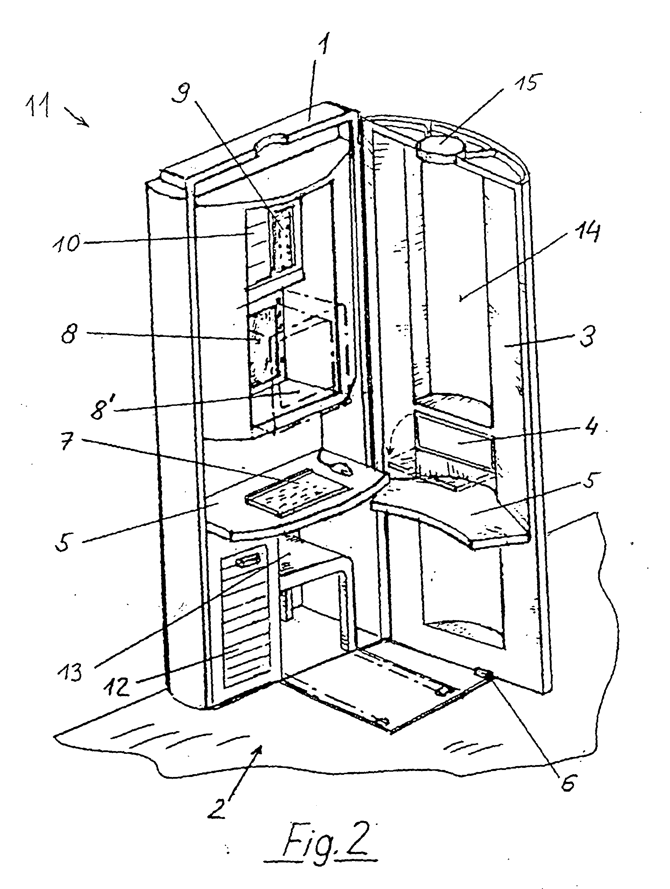

In der Zeichnung ist ein Ausführungsbeispiel der Erfindung dargestellt, welches nachstehend anhand der Figuren 1 und 2 näher beschrieben ist. In den Figuren sind gleiche Bauteile mit gleichen Bezugszeichen versehen.

Im einzelnen besteht die Ausstattung des Informationsterminals (nachfolgend Einrichtungsmodul genannt) aus den wie folgt beschriebenen Einzelelementen.

Es zeigen im einzelnen:
- Fig. 1: in einer Perspektivdarstellung das erfindungsgemäße Einrichtungsmodul im geschlossenen Zustand,
- Fig. 2: das Einrichtungsmodul gemäß Fig. 1 im geöffneten Zustand.

Fig. 1 zeigt das Einrichtungsmodul (Informationsterminal) 11 im geschlossenen Zustand mit den Hauptbaugruppen Rahmenstruktur 1 und Türelement 3. Durch ein Türfenster 14 hindurch können einzelne Komponenten wie ein Touchscreen 9 und ein Bildschirm 8 bedient bzw. abgelesen werden - also eine Bedienung erfolgt im geschlossenen Zustand des Moduls 11. Dabei befindet sich der Bildschirm 8 in einer nach vorne verschobenen Position 8'. Auch der Touchscreen 9 kann in eine vordere Position 9' verschoben werden. In dieser Position ist der Bildschirm 8' und auch der Touchscreen 9' bei geschlossenem Türelement gut einzusehen. Bei einer Anordnung des Moduls 11 im Türbereich der Passagierkabine eines Verkehrsflugzeuges kann der Bildschirm 8' zur Information der ankommenden Passagiere genutzt werden.

In Fig. 2 ist das Einrichtungsmodul im geöffneten Zustand gezeigt. Die kastenförmige Rahmenstruktur 1 des Moduls 11 besitzt mit der Flugzeugkabine kompatible Abmessungen (z. B. 650 x 1400 x 2100 mm) und ist im Türzugangsbereich 2 der Kabine montiert. An der Modul-Vorderseite ist ein nach außen gewölbtes einflügliges Türelement 3 angebracht, welches verschiedene Einbaukomponenten aufweist: wie eine aufklappbare Theke 4 und eine Arbeitsplatte 5. Das Türelement 3 lässt sich um vorzugsweise bis zu 90° aufschwenken und ist dann mit einer Verriegelung 6 fixierbar. Ein Leuchtmittel 15 ist im oberen Bereich des Türelementes 3 angeordnet. In der feststehenden Rahmenstruktur 1 können diverse Computer-Komponenten untergebracht werden. Aus der Zeichnung ersichtlich sind: eine Tastatur 7, welche auf einer weiteren Arbeitsplatte 5 aufliegt, ein Bildschirm 8 sowie ein Touchscreen 9 zur Eingabe von Daten für eine kabinenspezifische Steuerung 10, vorzugsweise eines sogenannten Forward Attendant Panels (CIDS). Nicht dargestellt, aber einsetzbar sind mögliche weitere Komponenten wie ein Rechner, DVD-Laufwerke, ein Fax/Scanner, ein Drucker, ein CD-ROM-Laufwerk und übliches Zubehör für einen Informations- und Rechnerarbeitsplatz sowie auch weitere Beleuchtungselemente. Im unteren Bereich der Rahmenstruktur 1 ist ein Stauraum 12 vorgesehen. Daneben ist Freiraum für einen herausziehbaren Hocker 13 vorgesehen, der in die beiden Arbeitsrichtungen Rahmenstruktur 1 und geöffnetes Türelement 3 verschiebbar ist. Der Hocker bzw. Stuhl 13 ist vorzugsweise in Führungsschienen 131 verschiebbar und zur Benutzung verriegelbar. Alle beweglichen Teile wie das Türelement 3, der Hocker 13, der Bildschirm 8 sowie der Touchscreen 9 sind in den Endpositionen verriegelbar.

Durch die Verschiebbarkeit der Komponenten ist ein Arbeiten am Einrichtungsmodul 11 im Sitzen oder im Stehen möglich. Bei Start und Landung ist das Modul 11 geschlossen (siehe Fig. 1), wobei der Bildschirm 8 sowie der Touchscreen 9 bedarfsweise in die vorderen Positionen 8' und 9' gezogen sind und so durch das Türfenster 14 vom Kabinenpersonal bedient werden können und besser ersichtlich sind. Sie können zum Abspielen eines Airline-Videos oder zum Anzeigen von Informationen über Wetter am Ankunftsort etc. genutzt werden.

Im Flug fungiert das Modul 11 im geöffneten Zustand als Informationscenter, wobei ein Flugbegleiter den Hocker 13 zum Sitzen benutzt. So können die Kabinenwerte (z. B. für Beleuchtung und Temperatur) eingestellt aber auch Dienstleistungen für die Passagiere erbracht werden, wie Abfragen im Intranet/Internet durchführen, Dokumente ausdrucken oder Informationen zu Anschlussflügen und Hotelreservierungen geben. Denkbar ist auch die Nutzung des Moduls 11 während des Fluges durch die Passagiere selbst. Gewisse Komponenten, wie beispielsweise der Touchscreen 9 zur Steuerung von kabinenspezifischen Funktionen oder ein Video/Audio Control Center oder ein Cabin System Control Center sind für einen solchen Fall verschließbar und nur den befugten Personen zugänglich.

Das Einrichtungsmodul 11 ist als ein aufklappbares schrankartiges Informationsterminal mit entsprechenden Multifunktionselementen ausgebildet. Der Einbauort des Moduls 11 liegt vorzugsweise im Türzugangsbereich 2 eines Passagierflugzeugs, um so eine Nutzung des bisher nicht durch Kabineneinbauten belegten Bereiches zu ermöglichen. Der Eingang für Passagiere durch eine Flugzeugtür in die Passagierkabine des Flugzeuges ist mit einem Pfeil gekennzeichnet. Der Türzugangsbereich 2 ist von nicht näher bezeichneten Räumen, wie Toiletten und Bordküchen umgeben und führt zum Sitzbereich der Passagiere über Längsgänge in der Passagierkabine. Das Modul 11 wird im Türzugangsbereich 2 mit der Rahmenstruktur 11 vorzugsweise parallel zur Eintrittsrichtung der Passagiere benachbart zur Flugzeugtür 16 angeordnet und, wie es bei Einbauten in einem Flugzeug üblich ist, mit entsprechenden Mitteln an der Flugzeugstruktur fixiert. Die Zeichnung verdeutlicht, dass das Modul 11 im Türbereich zur Information der ankommenden Passagiere genutzt werden kann. Durch das Türfenster 14 ist zumindest der Bildschirm 8' ersichtlich. Durch die Nutzung des Türbereichs als Standort für das Modul 11 kann eine vorteilhafte Doppelnutzung dieser Fläche erreicht werden, zum einen ist während der Start- und Landephase das Modul 11 mit eingeklapptem Türelement 3 geschlossen und der Ein- und Ausstieg der Passagiere ist gesichert. Zum anderen kann während des Fluges die Fläche vor der Flugzeugtür 16 als Sitzbereich vorgesehen sein (strichpunktierte Darstellung). Mit herausgeklapptem Türelement 3 wird so der Türbereich 2 in ein Dienstleistungs-Center verwandelt, wobei ein Flugbegleiter zur Betreuung der Passagiere bequem an der Arbeitsplatte 5 auf dem herausgezogenen Hocker 13 Platz nehmen kann.

## Patentansprüche

1. Einrichtungsmodul zur Informationsbereitstellung an Bord von Transportmitteln, insbesondere von Verkehrsflugzeugen, wobei das Einrichtungsmodul (11) als ein Informationsterminal ausgebildet ist, welches für das Kabinenpersonal zugängliche Komponenten zur kabinenspezifischen Steuerung und Überwachung enthält und Komponenten für passagierbezogene Dienstleistungen vorgesehen sind, **dadurch gekennzeichnet, dass** das Informationsterminal (11) eine Rahmenstruktur (1) und ein aufklappbares Türelement (3) aufweist, wobei ein Türfenster (14) im Türelement (3) vorgesehen ist, welches den Zugang zu bestimmten Komponenten (8, 9, 10) zur kabinenspezifischen Steuerung erlaubt und den Zugang zu Komponenten (4, 5, 7, 12) für passagierbezogene Dienstleistungen bei geschlossenem Türelement (3) versperrt.

2. Einrichtungsmodul nach Anspruch 1, **dadurch gekennzeichnet, dass** die Rahmenstruktur (1) als Kabineneinbau an einer Flugzeugstruktur fest fixierbar ist.

3. Einrichtungsmodul nach einem der Ansprüche 1 oder 2, **dadurch gekennzeichnet, dass** Komponenten, wie ein Bildschirm (8), ein Touchscreen (9), ein Bedien-Panel (10) an der Rahmenstruktur (1) angeordnet sind.

4. Einrichtungsmodul nach Anspruch 3, **dadurch gekennzeichnet, dass** der Bildschirm (8), der Touchscreen (9) und/oder das Bedien-Panel (10) im Bereich des Türfensters (14) angeordnet sind.

5. Einrichtungsmodul nach einem der Ansprüche 1 bis 4, **dadurch gekennzeichnet, dass** ein Hocker (13) unterhalb einer an der Rahmenstruktur (1) vorgesehenen Arbeitsplatte (5) angeordnet und beim geöffneten Zustand des Türelements (3) innerhalb des Informationsterminals verschiebbar ausgebildet ist.

6. Einrichtungsmodul nach einem der Ansprüche 1 bis 5, **dadurch gekennzeichnet, dass** eine aufklappbare Theke (4) und/oder eine Arbeitsplatte (5) und/oder Beleuchtungselemente (15) in das Türelement (3) integriert sind.

7. Einrichtungsmodul nach einem der Ansprüche 1 bis 6, **dadurch gekennzeichnet, dass** die Rahmenstruktur (1) einen Stauraum (12) zur Aufbewahrung von Komponenten, wie DVD-Player, Drucker, Scanner aufweist.

8. Passagierkabine mit einem Einrichtungsmodul nach einem der Ansprüche 1 bis 7, **dadurch gekennzeichnet, dass** das Einrichtungsmodul (11) benachbart zum Türzugangsbereich (2) der Passagierkabine angeordnet ist und das Türelement (3) in den Türzugangsbereich (2) einschwenkbar ist.

## Claims

1. Modular installation for providing information on board means of transport, in particular commercial aircraft, the modular installation (11) being constructed as an information terminal which contains components, which are accessible to the cabin personnel, for cabin-specific control and monitoring and components for passenger-related services, **characterised in that** the information terminal (11) has a frame structure (1) and door element (3) that can be opened, a door window (14) being provided in the door element (3) which allows access to certain components (8, 9, 10) for cabin-specific control and blocks access to components (4, 5, 7, 12) for passenger-related services when the door element (3) is closed.

2. Modular installation according to claim 1, **characterised in that** the frame structure (1) can be rigidly fixed to an aircraft structure as a cabin installation.

3. Modular installation according to claim 1 or 2, **characterised in that** components, such as a screen (8), a touch screen (9) or a control panel (10), are arranged on the frame structure (1).

4. Modular installation according to claim 3, **characterised in that** the screen (8), touch screen (9), and/or control panel (10) are arranged in the region of the door window (14).

5. Modular installation according to any one of claims 1 to 4, **characterised in that** a stool (13) is arranged below a work space (5) provided on the frame structure (1) and, when the door element (3) is open, is constructed so as to be displaceable inside the information terminal.

6. Modular installation according to any one of claims 1 to 5, **characterised in that** a counter (4) that can be unfolded and/or a work space (5) and/or lighting elements (15) are integrated in the door element (3).

7. Modular installation according to any one of claims 1 to 6, **characterised in that** the frame structure (1) comprises a storage space (12) for storing components, such as DVD players, printers and scanners.

8. Passenger cabin comprising a modular installation according to any one of claims 1 to 7, **characterised in that** the modular installation (11) is arranged adjacent to the door access region (2) of the passenger cabin and the door element (3) can be swivelled into the door access region (2).

## Revendications

1. Module d'information à bord d'un véhicule de transport, notamment d'un avion de ligne, ce module ayant la forme d'un terminal d'information qui contient des composants spécifiquement destinés à la commande et à la surveillance de la cabine et auxquels a accès le personnel de la cabine, ainsi que des composants pour des services destinés aux passagers, **caractérisé en ce que** ce terminal d'information (11) présente une structure en forme de cadre (1) avec un élément de porte (3) basculant, comprenant une fenêtre de porte (14) qui permet d'accéder aux composants (8, 9, 10) concernant la commande spécifique à la cabine mais qui empêche d'accéder aux composants (4, 5, 7, 12) concernant les services aux passagers quand l'élément de porte (3) est fermé.

2. Module d'information selon la revendication 1, **caractérisé en ce que** la structure (1) en forme de cadre peut, en tant qu'élément intégré à la cabine être solidaire de la structure de l'avion.

3. Module d'information selon la revendication 1 ou 2, **caractérisé en ce que** sur la structure (1) en forme de cadre sont montés des composants tels qu'un écran (8), un écran tactile (9), un panneau de service (10).

4. Module d'information selon la revendication 3, **caractérisé en ce que** l'écran (8), l'écran tactile (9) et/ou le panneau de service (10) sont disposés dans la zone de la fenêtre (14).

5. Module d'information selon une des revendications 1 à 4, **caractérisé en ce qu'**un escabeau (13) est disposé en dessous un plateau de travail (5) prévu sur la structure (1) et peut coulisser à l'intérieur du terminal d'information quand l'élément de porte (3) est ouvert.

6. Module d'information selon une des revendications 1 à 5, **caractérisé en ce qu'**une tablette (4) rabattable et/ou un plateau de travail (5) et/ou des éléments d'éclairage (15) sont intégrés à l'élément de porte (3).

7. Module d'information selon une des revendications 1 à 6, **caractérisé en ce que** la structure (1) en forme de cadre présente un espace de stockage (12) pour accueillir des composants tels qu'un lecteur de DVD, une imprimante, un scanner.

8. Cabine de passagers comprenant un module selon une des revendications 1 à 7, **caractérisée en ce que** le module (11) est disposé près de la zone d'accès (2) à la porte dans la cabine de passagers, et que l'élément de porte (3) peut pivoter pour entrer dans cette zone.
